(19) Europäisches Patentamt
European Patent Office
Office européen des brevets

(11) **EP 1 305 171 B1**

(12) **FASCICULE DE BREVET EUROPEEN**

(45) Date de publication et mention
de la délivrance du brevet:
**09.04.2008 Bulletin 2008/15**

(51) Int Cl.:
***B60C 9/22*** *(2006.01)* ***B60C 9/20*** *(2006.01)*

(21) Numéro de dépôt: **01958000.0**

(22) Date de dépôt: **20.07.2001**

(86) Numéro de dépôt international:
**PCT/EP2001/008430**

(87) Numéro de publication internationale:
**WO 2002/007994 (31.01.2002 Gazette 2002/05)**

(54) **PNEUMATIQUE AVEC NAPPE SOMMET DE PROTECTION EN FIBRE ARAMIDE**

LUFTREIFEN MIT EINEM ARAMID-GÜRTEL

TYRE WITH ARAMID FIBRE PROTECTIVE CROWN PLY

(84) Etats contractants désignés:
**AT BE CH CY DE DK ES FI FR GB GR IE IT LI LU MC NL PT SE TR**

(30) Priorité: **24.07.2000 FR 0009699**

(43) Date de publication de la demande:
**02.05.2003 Bulletin 2003/18**

(73) Titulaires:
• **Société de Technologie Michelin**
  **63000 Clermont-Ferrand Cedex 09 (FR)**
• **Michelin Recherche et Technique S.A.**
  **1763 Granges-Paccot (CH)**

(72) Inventeurs:
• **HERBELLEAU, Yves**
  **F-83320 CARQUEIRANNE (FR)**
• **PACHERIE, Hubert**
  **F-63100 Clermont-Ferrand (FR)**
• **GUERBERT-JUBERT, Jean-Luc**
  **F-70300 LUXEUIL-LES BAINS (FR)**
• **ESNAULT, Philippe**
  **US-Greenville - SC 29615 (US)**

(74) Mandataire: **Le Cam, Stéphane Georges Elie**
**Michelin & Cie,**
**Service SGD/LG/PI Ladoux**
**63040 Clermont-Ferrand Cedex 09 (FR)**

(56) Documents cités:
**EP-A- 0 200 055** **EP-A- 0 287 496**
**EP-A- 0 698 510** **EP-A- 0 752 325**
**US-A- 4 498 514**

• **PATENT ABSTRACTS OF JAPAN vol. 1998, no. 10, 31 août 1998 (1998-08-31) & JP 10 138708 A (BRIDGESTONE CORP), 26 mai 1998 (1998-05-26)**

**Description**

La présente invention concerne les pneumatiques à armature de carcasse radiale, et particulièrement la protection de leur armature de sommet.

Les pneumatiques destinés à rouler dans des conditions difficiles, par exemple sur des sols comportant des cailloux ou objets coupants présentent usuellement une armature de sommet comprenant un bloc de travail et radialement extérieurement un bloc de protection. Le bloc de travail est destiné à reprendre les efforts dus au gonflage et au roulage du pneumatique. Le bloc de protection est destiné à protéger les nappes du bloc de travail des dommages dus aux choc et perforations subis en utilisation et comprend au moins une nappe de renforts parallèles. Ces renforts ont souvent un allongement à la rupture supérieur à celui des nappes de travail qu'ils protègent.

Pour améliorer l'endurance de l'armature de sommet d'un tel pneumatique, la demande WO99/00260 divulgue un pneumatique comprenant un sommet, deux flancs et deux bourrelets, une armature de carcasse ancrée dans les deux bourrelets et une armature de sommet, ladite armature de sommet comprenant radialement de l'intérieur vers l'extérieur, un bloc de travail et un bloc de protection avec au moins une nappe de renforts parallèles orientés sensiblement circonférentiellement, dans lequel la nappe de protection est constituée de renforts métalliques élastiques. Dans ce pneumatique, la nappe du bloc de travail adjacente à la nappe de protection est constituée de renforts métalliques inextensibles.

Le document EP 0 698 510 décrit également un pneumatique comprenant un sommet, deux flancs et deux bourrelets, une armature de carcasse ancrée dans les deux bourrelets et une armature de sommet, ladite armature de sommet comprenant radialement de l'intérieur vers l'extérieur, un bloc de travail et un bloc de protection avec au moins une nappe de renforts parallèles orientés sensiblement circonférentiellement dans lequel la nappe de protection est constituée de renforts non métallique.

L'invention a pour objet une autre architecture de pneumatique permettant aussi d'améliorer substantiellement l'endurance de l'armature de sommet et notamment dans le cas de pneumatiques pour avion.

Dans ce qui suit, on entend par :

- " titre ", la masse en grammes de mille mètres d'un renforts ; le titre est exprimé en tex ; la contrainte subie par un renfort sa ténacité (force-rupture divisée par le titre) ou le module de ce renfort sont exprimés en " cN/tex ", cN voulant dire centi-newton ; l'allongement à la rupture est indiqué en pourcentage ;

- "renfort " (" reinforcing thread ") tout élément de renforcement sous forme d'un fil, susceptible de renforcer une matrice déterminée, par exemple une matrice de caoutchouc ; à titre de renforts, on citera par exemple des fibres multifilamentaires (" multifilament yarns "), ces fibres pouvant être tordues ou non sur elles-mêmes, des fils unitaires tels que des monofils de diamètre élémentaire élevé, avec ou sans torsion sur eux-mêmes, des câblés ou des retors (" cords ") obtenus par des opérations de câblage ou retordage de ces fils unitaires ou de ces fibres, de tels renforts pouvant être hybrides, c'est-à-dire composites, comportant des éléments de natures différentes ;

- "retors " (" plied yarn " ou " folded yarn ") un renfort constitué par deux brins (" single yarns ") ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage ;

- pour déterminer la valeur de l'angle d'hélice du retors considéré obtenue lors de la seconde étape de retordage, on utilise la formule suivante (pour des assemblages homogènes) :

$$tg\gamma = \frac{N \times \sqrt{T}}{10^4 \times \sqrt{\frac{10 \times d}{4\pi} \times \cos[(n-2)\frac{\pi}{6}]}}$$

dans laquelle :

- N est la torsion appliquée à l'ensemble des brins en tours par mètre,
- T est le titre d'un brin en tex,
- d est la densité du renfort considéré, l'aramide a une densité de 1,44,
- n est le nombre de brins du retors considéré, et
- γ est l'angle d'hélice exprimé en degrés ;

- " renfort adhérisé " un renfort ayant subi un traitement d'enduction approprié, dit d'encollage ou d'adhérisation, susceptible de faire adhérer ce renfort, après un traitement thermique approprié, à la matrice à laquelle il est destiné ;

- " axiale " une direction parallèle à l'axe de rotation du pneumatique ; cette direction peut être " axialement intérieure " lorsqu'elle est dirigée vers l'intérieur du pneumatique et " axialement extérieure " lorsqu'elle est dirigée vers l'extérieur du pneumatique ;

- " radiale " une direction perpendiculaire à l'axe de rotation du pneumatique et passant par celui-ci ; cette direction peut être " radialement intérieure " ou " radialement extérieure " selon qu'elle se dirige vers l'axe de rotation du pneumatique ou vers l'extérieur du pneumatique ;

- " module d'élasticité " d'un mélange caoutchoutique un module sécant d'extension à 10 % de déformation et à température ambiante ;
- " renfort métallique inextensible ", un renfort ayant un allongement relatif inférieur à 0,2% mesuré sous 10% de sa force de rupture ;
- " renfort métallique élastique ", un renfort ayant un allongement relatif supérieur à 0,5% mesuré à 10% de sa force de rupture ;
- " un renfort orienté circonférentiellement ", un renfort orienté sensiblement parallèlement à la direction circonférentielle du pneumatique, c'est-à-dire faisant avec cette direction un angle ne s'écartant pas de plus de cinq degrés de la direction circonférentielle ; et
- " un renfort orienté radialement ", un renfort contenu sensiblement dans un même plan axial ou dans un plan faisant avec un plan axial un angle inférieur ou égal à 10°.

Les propriétés mécaniques des renforts sont déterminées sur des renforts ayant été soumis à un conditionnement préalable. Par " conditionnement préalable ", on entend le stockage des renforts pendant au moins 24 heures, avant mesures, dans une atmosphère standard selon la norme européenne DIN EN 20139 (température de 20 $\pm$ 2°C ; hygrométrie de 65 $\pm$ 2 %).

On entend par module initial d'un renfort, après l'avoir soumis à une tension initiale égale à la demi-somme des titres de chacun des brins élémentaires (c'est-à-dire une tension initiale de 0,5 cN/tex), le module sécant mesuré sur ce renfort, dans les mêmes conditions que le conditionnement, sous une déformation de 0,7 % ; les échantillons ont une longueur initiale de 400 mm et la vitesse de traction est de 200 mm/mn (ou 50 mm/mn lorsque l'allongement à la rupture est inférieur à 5%) ; les mesures de modules et de contraintes s'entendent comme la moyenne de dix échantillons. Le module initial d'un renfort est usuellement déterminé avec une précision de l'ordre de $\pm$ 10 %.

Le pneumatique, selon l'invention, comprend un sommet, deux flancs et deux bourrelets, une armature de carcasse ancrée dans chacun des bourrelets et une armature de sommet. L'armature de sommet comprend radialement de l'intérieur vers l'extérieur un bloc de travail et un bloc de protection. Le bloc de protection a au moins une nappe de renforts parallèles orientés circonférentiellement. Ce pneumatique est caractérisé en ce que la nappe du bloc de protection est constituée de renforts de polyamide aromatique de module initial inférieur à 1000 cN/tex et de ténacité supérieure à 65 cN/tex.

De préférence, le module initial des renforts de polyamide aromatique de la nappe du bloc de protection est inférieur ou égal à 500 cN/tex.

L'invention a aussi pour objet un pneumatique comprenant un sommet, deux flancs et deux bourrelets, une armature de carcasse ancrée dans chacun des bourrelets et une armature de sommet. L'armature de sommet comprend radialement de l'intérieur vers l'extérieur un bloc de travail et un bloc de protection. Le bloc de protection a au moins une nappe de renforts parallèles orientés circonférentiellement. Ce pneumatique est caractérisé en ce que la nappe de renforts parallèles d'orientation circonférentielle est constituée de renforts de polyamide aromatique tels que l'angle d'hélice des renforts est supérieur à 28 degrés.

De tels renforts de polyamide aromatique présentent une courbe force allongement " bi-module ". C'est-à-dire qu'aux faibles allongements le module initial d'extension du renfort est faible, inférieur à 1000 cN/tex et même à 500 cN/tex alors qu'au-delà, la courbe force allongement se redresse très sensiblement. En conséquence, la nappe sommet de protection selon l'invention ne reprend pas ou pratiquement pas les efforts de frettage du sommet du pneumatique au gonflage et en centrifugation. Ces efforts sont repris par la ou les nappes sommet du bloc de travail. Les renforts de la nappe sommet de protection selon l'invention ne sont pas mis sous tension en fonctionnement normal du pneumatique, ils peuvent donc remplir leur office de protection lors d'un passage sur un objet coupant ou contondant tel un caillou ou une pierre. Ils remplissent très bien cet office en raison de leur forte ténacité couplée aux excellentes propriétés de résistance à la coupure des renforts en polyamide aromatique.

Il est aussi à noter que cette nappe sommet de protection dont les renforts sont constitués de polyamide aromatique à très haut angle d'hélice, procure une excellente adhésion du bloc de protection sur le bloc de travail. On constate en effet une amélioration sensible dans les tests réalisés à très haute vitesse.

De préférence, l'angle d'hélice des renforts est inférieur ou égal à 38 degrés. En effet, au-delà de cette valeur de l'angle d'hélice, il devient très difficile de mettre en oeuvre les renforts en raison de phénomènes de vrillage.

La gamme préférentielle de valeurs d'angles d'hélice des renforts est entre 31 et 38 degrés. Et pour préserver le caractère bi-module des renforts pendant leur traitement d'adhérisation, il est préférable de maintenir la tension appliquée inférieure à 3 cN/tex et même inférieure à 1,5 cN/tex.

Dans cette gamme de valeurs d'angles d'hélice, on constate que, en schématisant la courbe force allongement des renforts obtenus par deux tangentes, l'une à l'origine correspondant au module d'extension initial et l'autre dans la zone de la rupture, on peut définir le point d'intersection de ces deux tangentes comme le point de transition A du renfort. Ce point de transition est compris entre 5 et 8 % d'allongement, ce qui est très notablement supérieur à l'allongement rupture d'un renfort en polyamide aromatique usuel qui est de l'ordre de 4 à 5 %.

Les titres des renforts utilisés dans le bloc de protection du pneumatique selon l'invention sont de préférence supérieurs à 600 tex.

Avantageusement, l'armature de sommet du pneumatique selon l'invention est telle que la nappe du bloc de protection composée de renforts orientés circonférentiellement est adjacente radialement extérieurement à une nappe de renforts parallèles orientés circonférentiellement du bloc de travail.

Avantageusement, cette nappe du bloc de travail comprend des renforts de module initial supérieur à 1800 cN/tex. Ces renforts peuvent être constitués de polyamide aromatique d'angles d'hélices inférieurs à 26 degrés. L'allongement rupture de tels renforts est de l'ordre de 4 à 5 %.

L'armature de sommet du pneumatique selon l'invention est telle que les efforts dus au gonflage et à la centrifugation sont bien repris par les nappes du bloc de travail, puisque le point de transition A des renforts constituant la nappe de protection est au-delà de l'allongement rupture des renforts constituant la nappe de renforcement adjacente, d'orientation circonférentielle, du bloc de travail.

De préférence, la nappe du bloc de protection s'étend axialement au-delà du bloc de travail de part et d'autre du plan médian du pneumatique.

L'invention a aussi pour objet un pneumatique d'avion comprenant un sommet, deux flancs et deux bourrelets, une armature de carcasse ancrée dans chacun des bourrelets et une armature de sommet, l'armature de sommet comprenant radialement, de l'intérieur vers l'extérieur, un bloc de travail et un bloc de protection ayant au moins une nappe de renforts parallèles orientés sensiblement circonférentiellement, caractérisé en ce que la nappe du bloc de protection est constituée de renforts de polyamide aromatique tels que l'angle d'hélice de ces renforts est supérieur à 28 degrés.

L'invention concerne aussi un pneumatique pour véhicule routier lourd comprenant un sommet, deux flancs et deux bourrelets, une armature de carcasse ancrée dans chacun des bourrelets et une armature de sommet, l'armature de sommet comprenant radialement, de l'intérieur vers l'extérieur, un bloc de travail et un bloc de protection ayant au moins une nappe de renforts parallèles orientés sensiblement circonférentiellement, caractérisé en ce que la nappe dudit bloc de protection est constituée de renforts de polyamide aromatique tels que l'angle d'hélice des renforts est supérieur à 28 degrés.

Des exemples de réalisation de l'invention dans le cas de pneumatiques d'avion sont maintenant décrits à l'aide du dessin annexé dans lequel :

- la figure 1 présente schématiquement, vu en section axiale, un pneumatique selon l' invention ;
- la figure 2 présente un second mode de réalisation ;
- la figure 3 présente un troisième mode de réalisation ;
- la figure 4 présente les courbes force-allongement de plusieurs renforts ; et
- la figure 5 présente les courbes force-allongement de deux renforts complémentaires.

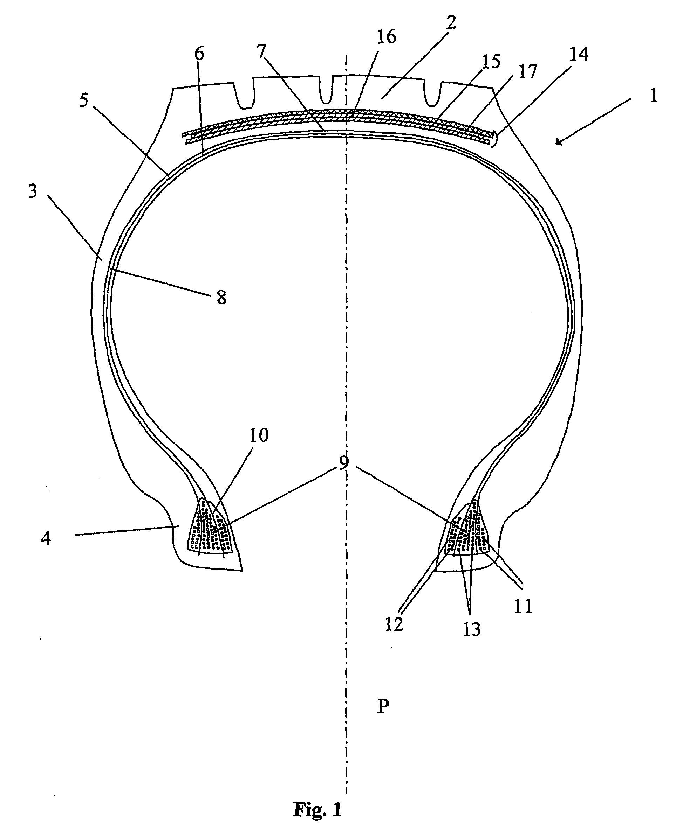

Le pneumatique 1 d'avion représenté schématiquement en demi-coupe axiale à la figure 1 comprend un sommet 2, deux flancs 3 et deux bourrelets 4. Une armature de carcasse 5 s'étend d'un bourrelet à l'autre et est constituée de deux alignements circonférentiels 6 et 7 de premiers renforts. Les alignements circonférentiels de premiers renforts 6 et 7 sont orientés sensiblement radialement dans les flancs 3 et sont constitués de renforts en polyamide aromatique ou aramide. Les premiers renforts sont disposés parallèlement et sont séparés par une couche de mélange 8 dont la nature et le module sont adaptés en fonction de leur position dans le pneumatique.

A la figure 1 est aussi présenté un premier exemple d'armature de sommet 14. Celle-ci est constituée d'un bloc de travail et d'un bloc de protection. Le bloc de protection comprend une nappe 17 constituée de renforts en polyamide aromatique d'angle d'hélice compris entre 28 et 38 degrés et de titre supérieur à 600 tex. Le bloc de travail comporte deux nappes de renforts 15 et 16 d'orientation sensiblement circonférentielle obtenues par enroulement hélicoïdal d'au moins un renfort. Ce renforcement du bloc de travail comprend des renforts en polyamide aromatique ou aramide. Ces renforts ont un module initial supérieur à 1800 cN/tex et les retors d'aramide ont un angle d'hélice inférieur à 26 degrés.

Le nombre de nappes de renfort de ce bloc de travail ainsi que le pas de pose sont adaptés en fonction de la dimension du pneumatique et de ses conditions d'utilisation. Ce mode de réalisation d'une armature de sommet a l'avantage de procurer un frettage très efficace qui minimise la variation des dimensions du pneumatique lors du gonflage ainsi qu'à haute vitesse. On constate que l'évolution du profil peut être trois à quatre fois plus faible que pour un pneumatique d'avion usuel tel un 30-7.7R16 AIRX. Cet excellent frettage a aussi l'avantage de ne pas mettre en forte extension les mélanges constituant la bande de roulement du sommet du pneumatique. Les fissurations en surface de la bande de roulement dues à l'ozone présente dans l'air sont fortement réduites.

On a aussi constaté que l'adhésion de la nappe 17 du bloc de protection sur la nappe 16 adjacente est excellente.

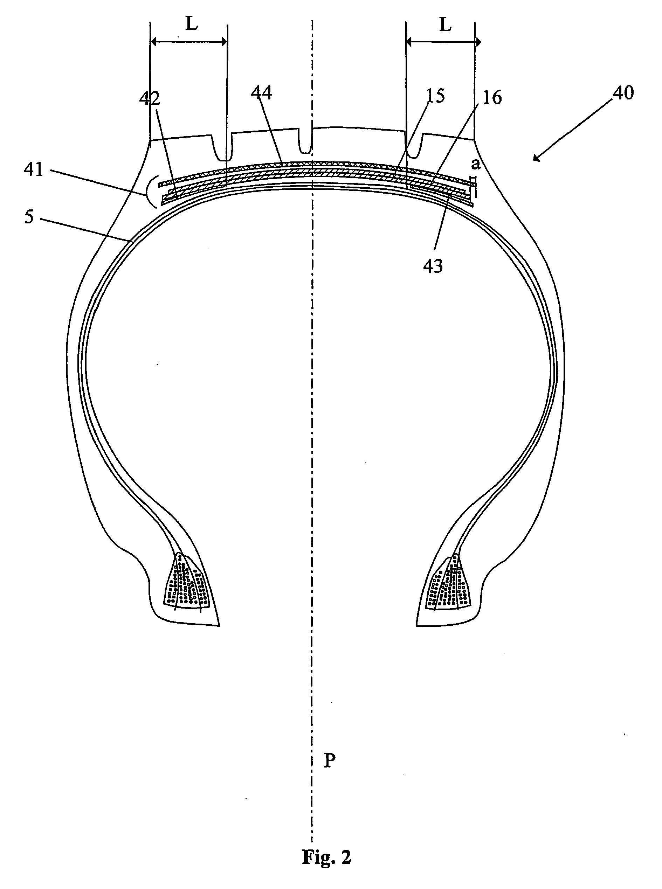

L'armature de sommet 41 du pneumatique 40 présenté à la figure 2 comporte comme précédemment deux nappes de renforts d'orientation sensiblement circonférentielle 15 et 16 et est complétée par deux couches 42 et 43 d'éléments de renforcement de module initial supérieur à 1800 cN/tex, orientés sensiblement circonférentiellement disposées axialement de part et d'autre du plan médian du pneumatique dans les zones latérales L du sommet. Ces couches sont aussi constituées de renforts aromatiques de module initial supérieur à 1800 cN/tex. Elles permettent de renforcer le frettage des zones latérales L du sommet. Les couches 42 et 43 sont disposées radialement entre les nappes 15 et 16 et l'armature de carcasse 5.

L'armature 41 est aussi complétée par une nappe sommet de protection 44 disposée radialement extérieurement relativement aux autres nappes de l'armature de sommet 41. Cette nappe sommet de protection est constituée comme précédemment de renforts aramides à très haute torsion orientés sensiblement circonférentiellement. Il est à noter que cette nappe de protection s'étend axialement au-delà des nappes 15 et 16 de part et d'autre du plan médian P du pneumatique d'une distance axiale a.

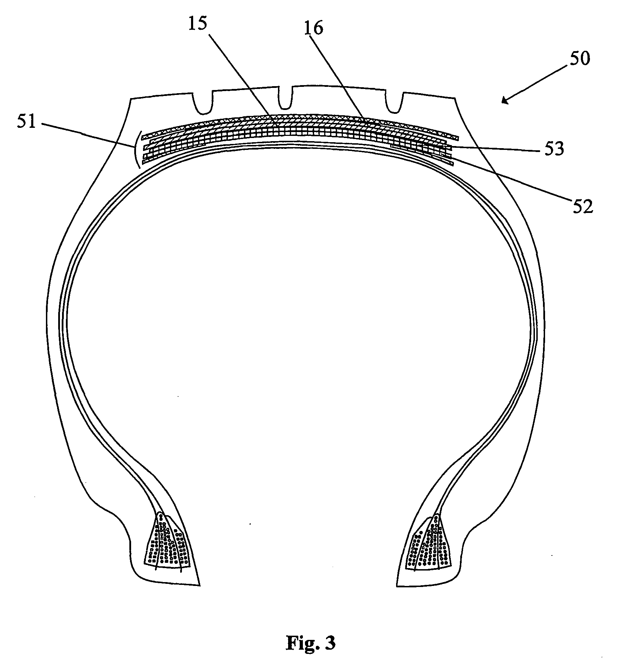

La figure 3 présente un pneumatique 50 avec une armature de sommet 51 comportant en plus deux nappes de renfort 52, 53, parallèles entre eux dans chaque nappe et croisés d'une nappe à la suivante en faisant avec la direction circonférentielle un angle α, compris entre 5 et 35 degrés, les renforts ayant un module initial supérieur à 1800 cN/tex. Ces renforts peuvent être aussi en polyamide aromatique d'angle d'hélice inférieur à 26 degrés. Ces deux nappes sont disposées radialement en dessous des nappes de renforts circonférentiels 15 et 16. Elles augmentent la poussée de dérive du pneumatique 50 relativement à celle du pneumatique 40. Ce pneumatique est particulièrement adapté pour servir de pneumatique directeur ou roulette d'un avion. Une architecture similaire est aussi applicable pour des pneumatiques de véhicules lourds.

Dans les trois exemples présentés, l'ancrage des deux alignements circonférentiels 6 et 7 est assuré dans les bourrelets 3 par des alignements ou " piles " 9 de second renforts orientés circonférentiellement et disposés axialement de part et d'autre de chaque alignement circonférentiel de premiers renforts 6 et 7. Chaque alignement ou pile 9 de seconds renforts peut être obtenue par enroulement hélicoïdal d'un renfort. Les premiers renforts, radiaux, et seconds renforts, circonférentiels, sont séparés les uns des autres par une couche de mélange caoutchoutique 10 de très haut module d'élasticité pour éviter tout contact direct d'un renfort avec un autre. L'adhésion latérale entre chaque alignement circonférentiel 6 et 7 et les piles 9 de renforts circonférentiels permet de reprendre la tension qui se développe dans ces premiers renforts lors du gonflage du pneumatique 1. Cette structure de bourrelet assure un excellent ancrage qui reste très efficace même pour les pressions de gonflage très élevées des pneumatiques d'avion, supérieures à 12 bars et pouvant atteindre 25 bars dans certaines applications particulières.

Les piles 9 de seconds renforts sont réparties en trois groupes, deux piles 11 disposées axialement extérieurement à l'armature de carcasse 5 du côté extérieur du pneumatique, deux piles 12 disposées axialement intérieurement relativement à l'armature de carcasse 5, du côté intérieur du pneumatique et 4 piles 13 disposées entre les deux alignements circonférentiels 6 et 7 de l'armature de carcasse 5.

L'armature de sommet des pneumatiques selon l'invention peut aussi être utilisée avec des armatures de carcasse ancrées usuellement dans les bourrelets par un retournement autour d'une tringle.

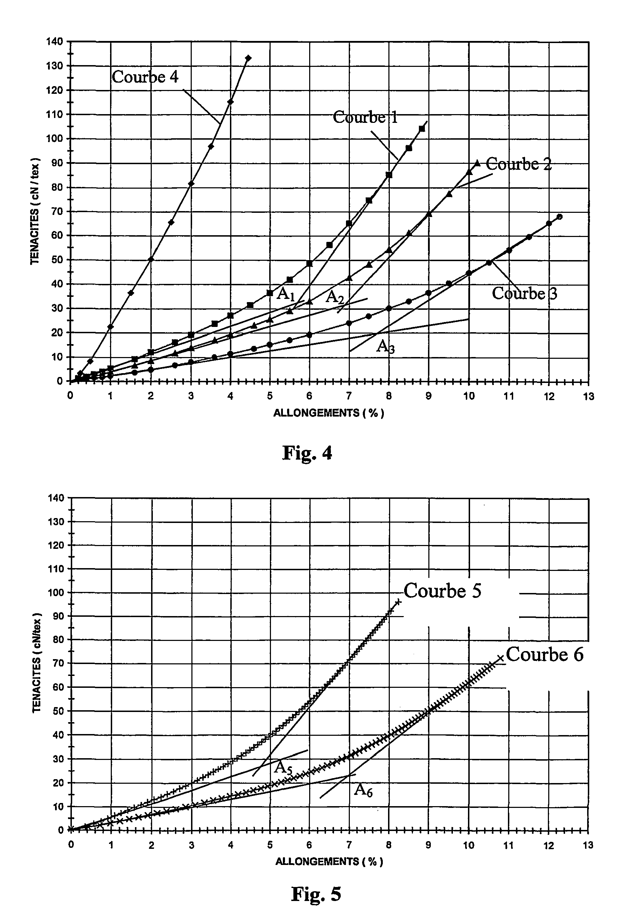

La figure 4 présente les courbes force allongement de quatre renforts en polyamide aromatique utilisés dans les pneumatiques selon l'invention :

- la courbe 1 correspond à un retors adhérisé d'angle d'hélice 31,5 degrés ;
- la courbe 2 à un retors adhérisé d'angle d'hélice 34 degrés ;
- la courbe 3 à un retors adhérisé d'angle d'hélice 38 degrés ; et
- la courbe 4 à un retors adhérisé d'angle d'hélice 21 degrés.

Les courbes présentent en abscisse l'allongement du retors en % et en ordonnée le rapport entre la force appliquée et le titre du retors, ce qui correspond à la ténacité en cN/tex.

La courbe 4 correspond à un retors adhérisé de titre 735 tex élaboré à partir de deux brins aramide identiques de 330 tex surtordus individuellement à 230 tours par mètre puis retordus simultanément à 230 t/m dans la direction opposée, ce qui lui confère un angle d'hélice de 21 degrés. L'allongement rupture est de 4,45 %, le module initial est de 2000 cN/tex. La ténacité de ce retors est de 133 cN/tex.

La courbe 1 correspond à un retors adhérisé de titre 1235 tex élaboré à partir de trois brins aramide identiques de 330 tex surtordus individuellement à 310 tours par mètre puis retordus simultanément à 310 t/m dans la direction opposée, ce qui lui confère un angle d'hélice de 31,5 degrés. L'allongement rupture est de 8,8 %, le module initial de l'ordre de 480 cN/tex et la ténacité de 104 cN/tex. La courbe force-allongement de ce retors présente un caractère bi-module marqué avec un point de transition $A_1$ de l'ordre de 5,7%.

La courbe 2 correspond à un retors adhérisé de titre 1291 tex élaboré à partir de trois brins aramide identiques de 330 tex surtordus individuellement à 350 tours par mètre puis retordus simultanément à 350 t/m dans la direction opposée, ce qui lui confère un angle d'hélice de 34 degrés. L'allongement rupture est de 10,2 %, le module initial de l'ordre de 330 cN/tex et la ténacité de 90 cN/tex. Le point de transition $A_2$ de la courbe force-allongement est de l'ordre de 6,9 %.

La courbe 3 correspond à un retors adhérisé de titre 1371 tex élaboré à partir de trois brins aramide identiques de 330 tex surtordus individuellement à 390 tours par mètre puis retordus simultanément à 390 t/m dans la direction opposée, ce qui lui confère un angle d'hélice de 38 degrés. L'allongement rupture est de 12,3 %, le module initial de l'ordre de 165 cN/tex et la ténacité de 68 cN/tex. Le point de transition $A_3$ de la courbe force-allongement est de l'ordre de 7,7 %.

Les retors selon l'invention ont été adhérisés de façon usuelle avec deux bains successifs, le premier, un bain de pré-adhérisation dépose une colle de type époxy et le second une colle de type RFL. La tension de traitement lors du premier bain était de 1 cN/tex et lors du second de 0,6 cN/tex. La température de traitement était de l'ordre de 230°C.

Ces courbes force-allongement montrent clairement la modification de comportement lié à l'augmentation de la torsion des retors. Ces trois courbes présentent un comportement bi-module marqué avec un point de transition A qui se trouve à un allongement croissant avec l'augmentation de l'angle d'hélice.

La figure 5 présente les courbes force-allongement de deux renforts selon l'invention. La courbe 5 correspond à un retors adhérisé de titre 791 tex élaboré à partir de deux brins aramide identiques de 330 tex surtordus individuellement à 360 tours par mètre puis retordus simultanément à 360 tours par mètre dans la direction opposée, ce qui lui confère un angle d'hélice de 31,5 degrés. L'allongement rupture est de 8,2 %, le module initial de l'ordre de 500 cN/tex et la ténacité de 96 cN/tex. Le point de transition $A_5$ est de 4,7 %. On retrouve un comportement proche de celui du retors de la courbe 1.

La courbe 6 correspond à un retors adhérisé de titre 848 tex élaboré à partir de deux brins aramide identiques de 330 tex surtordus individuellement à 450 tours par mètre puis retordus simultanément à 450 tours par mètre dans la direction opposée, ce qui lui confère un angle d'hélice de 37,5 degrés. L'allongement rupture est de 10,8 %, le module initial de l'ordre de 300 cN/tex et la ténacité de 72 cN/tex. Le point de transition $A_6$ est de 6,9 %. On retrouve un comportement proche de celui du retors de la courbe 3.

On a testé un pneumatique selon l'invention de dimension 30 - 7,7 R 16 comportant :

- comme armature de carcasse trois alignements circonférentiels de premiers renforts constitués de retors adhérisé de titre égal à 501 tex élaborés à partir de 3 brins aramide identiques de 167 tex ; la densité des premiers renforts est de 88 f/dm dans la zone des bourrelets ;
- comme seconds renforts des monofilaments d'acier de diamètre 0,98 mm et répartis en 13 piles 9 :

  • 3 piles axialement les plus intérieures avec 14, 17 et 20 spires,
  • 4 piles entre les premier et second alignements circonférentiels avec 10, 14, 16 et 20 spires,
  • 3 piles entre les second et troisième alignements circonférentiels avec 19, 15 et 10 spires, et
  • 3 piles axialement les plus extérieures avec 14, 10 et 7 spires.

- une armature de sommet avec :

  • trois nappes de renforts orientés sensiblement circonférentiellement constitués de retors adhérisés de titre égal à 735 tex élaborés à partir de 2 brins aramides identiques de 330 tex (courbe 4); les renforts ont un pas de pose de 1,2 mm ; et
  • une nappe de protection constituée de renforts d'angle d'hélice 38 degrés correspondant au renfort de la courbe force allongement 6.

La couche de mélange de très haut module d'élasticité avait un module sécant d'extension de 45 MPa et une dureté shore A de 90.

Ce pneumatique a subi des tests de résistance à l'éclatement et les pressions maximales mesurées ont été de l'ordre de 100 bars. Il est aussi caractérisé par un taux d'allongement de son développement entre la pression nulle et sa pression de service de 15 bars de l'ordre de 1,5 %. Ce pneumatique a aussi subi avec succès des tests de décollage similaires aux tests normalisés pour l'homologation des pneumatiques pour avion.

Ce pneumatique a été comparé à un pneumatique d'architecture usuelle comportant des renforts d'armature de carcasse en Nylon et une armature de sommet avec plusieurs nappes de frettage elles aussi composées de renforts en Nylon et une nappe sommet de protection métallique. Cette nappe de protection était composée de renforts métalliques posés avec des ondulations dans le plan du sommet pour obtenir la plus grande efficacité possible.

Le test pratiqué correspond à faire rouler les pneumatiques sur un volant comportant une série d'indenteurs hémisphériques de taille adaptée pour endommager l'armature de sommet des pneumatiques. Les deux pneumatiques testés ont montré une résistance pratiquement identique. En conséquence, la nappe sommet de protection selon l'invention a l'avantage d'offrir la même résistance aux indentations qu'une nappe métallique classique tout en procurant une bien meilleure résistance à l'oxydation de l'armature de sommet.

La confection du pneumatique selon l'invention peut avantageusement être réalisée sur un noyau rigide imposant la forme de sa cavité intérieure, tels ceux décrits par EP 242 840 ou EP 822 047. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation.

Ce mode de fabrication a l'avantage de réduire fortement voire d'éliminer les précontraintes imposées aux renforts, particulièrement à ceux orientés à 0°, lors des phases traditionnelles de conformation.

On peut aussi refroidir partiellement le bandage sur le noyau pour maintenir les renforts dans l'état de déformation imposé lors de la pose.

On peut aussi, de manière équivalente, fabriquer le pneumatique sur un tambour tel que décrit dans WO 97/47 463 ou EP 0 718 090, à condition de faire la conformation de l'ébauche du pneumatique avant d'effectuer la pose des renforts orientés circonférielle-

ment.

On peut encore réaliser la pose des renforts orientés circonférentiellement sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

**Revendications**

1. Pneumatique (1) comprenant un sommet (2), deux flancs (3) et deux bourrelets (4), une armature de carcasse (5) ancrée dans chacun des bourrelets et une armature de sommet (14, 41, 51), ladite armature de sommet comprenant radialement, de l'intérieur vers l'extérieur, un bloc de travail et un bloc de protection ayant au moins une nappe (17, 44) de renforts parallèles orientés sensiblement circonférentiellement, ladite nappe (17, 44) dudit bloc de protection étant constituée de renforts de polyamide aromatique, **caractérisé en ce que** le module initial des renforts est inférieur à 1000 cN/tex et de ténacité supérieure à 65 cN/tex.

2. Pneumatique (1) selon la revendication 1, dans lequel le module initial des renforts de polyamide aromatique est inférieur ou égal à 500 cN/tex.

3. Pneumatique (1, 40, 50) comprenant un sommet (2), deux flancs (3) et deux bourrelets (4), une armature de carcasse (5) ancrée dans chacun des bourrelets et une armature de sommet (14, 41, 51), ladite armature de sommet comprenant radialement, de l'intérieur vers l'extérieur, un bloc de travail et un bloc de protection ayant au moins une nappe (17, 44) de renforts parallèles orientés sensiblement circonférentiellement, **caractérisé en ce que** ladite nappe (17, 44) dudit bloc de protection est constituée de renforts de polyamide aromatique tels que l'angle d'hélice desdits renforts est supérieur à 28 degrés.

4. Pneumatique (1, 40, 50) selon la revendication 3, dans lequel l'angle d'hélice desdits renforts est inférieur ou égal à 38 degrés.

5. Pneumatique (1, 40, 50) selon l'une des revendications 3 et 4, dans lequel l'angle d'hélice desdits renforts est compris entre 31 et 38 degrés.

6. Pneumatique (1, 40, 50) selon l'une des revendications 1 à 5, dans lequel la tension appliquée audits renforts lors de leur traitement d'adhérisation est inférieure à 3 cN/tex.

7. Pneumatique (1, 40, 50) selon la revendication 6, dans lequel la tension appliquée audits renforts lors de leur traitement d'adhérisation est inférieure à 1,5 cN/tex.

8. Pneumatique (1, 40, 50) selon l'une des revendications 1 à 7, dans lequel le titre des renforts de ladite nappe dudit bloc de protection a un titre supérieur à 600 tex.

9. Pneumatique (1, 40, 50) selon l'une des revendications 1 à 8, dans lequel ladite nappe (17, 44) du bloc de protection s'étend axialement au-delà dudit bloc de travail de part et d'autre du plan médian (P) du pneumatique.

10. Pneumatique (1, 40, 50) selon l'une des revendications 1 à 9, dans lequel ladite nappe (17, 44) du bloc de protection est adjacente radialement extérieurement à une nappe (16) de renforts parallèles orientés sensiblement circonférentiellement dudit bloc de travail.

11. Pneumatique (1, 40, 50) selon la revendication 10, dans lequel les renforts de ladite nappe (16) du bloc de travail ont un module initial d'élasticité supérieur à 1800 cN/tex.

12. Pneumatique (1, 40, 50) selon la revendication 11, dans lequel les renforts de ladite nappe (16) du bloc de travail sont des renforts de polyamide aromatique d'angles d'hélice inférieurs à 26 degrés.

13. Pneumatique (1, 40, 50) selon l'une des revendications 10 à 12, dans lequel, le sommet comprenant une zone centrale et deux zones latérales, le bloc de travail comprend en plus deux couches (42, 43) d'éléments de renforcement de module initial d'élasticité supérieur à 1800 cN/tex, orientés circonférentiellement et disposées axialement de part et d'autre du plan médian (P) du pneumatique dans les zones latérales dudit sommet.

14. Pneumatique (1, 40, 50) selon l'une des revendications 10 à 13, dans lequel ledit bloc de travail comprend en plus deux nappes (52, 53) de renfort, parallèles entre eux dans chaque nappe et croisés d'une nappe à la suivante en faisant avec la direction circonférentielle un angle $\alpha$, compris entre 5 et 35 degrés, lesdits renforts ayant un module initial supérieur à 1800 cN/tex.

## Claims

1. Tyre (1) comprising a crown (2), two sidewalls (3) and two beads (4), a casing reinforcement (5) anchored in each of the beads and a crown reinforcement (14, 41, 51), the said crown reinforcement comprising radially, from the inside outwards, a working block and a protective block having at least one ply (17, 44) of substantially circumferentially oriented parallel reinforcing threads, the said ply (17, 44) of the said protective block consisting of aromatic polyamide reinforcing threads **characterized in that** the initial modulus of the reinforcing threads is less than 1000 cN/tex and the tenacity is greater than 65 cN/tex.

2. Tyre (1, 40, 50) according to Claim 1, in which the initial modulus of the aromatic polyamide reinforcing threads is less than or equal to 500 cN/tex.

3. Tyre (1, 40, 50) comprising a crown (2), two sidewalls (3) and two beads (4), a casing reinforcement (5) anchored in each of the beads and a crown reinforcement (14, 41, 51), the said crown reinforcement comprising radially, from the inside outwards, a working block and a protective block having at least one ply (17, 44) of substantially circumferentially oriented parallel reinforcing threads, **characterized in that** the said ply (17, 44) of the said protective block consists of aromatic polyamide reinforcing threads which are such that the helix angle of the said reinforcing threads is greater than 28 degrees.

4. Tyre (1, 40, 50) according to Claim 3, in which the helix angle of the said reinforcing threads is less than or equal to 38 degrees.

5. Tyre (1, 40, 50) according to either of Claims 3 and 4, in which the helix angle of the said reinforcing threads is between 31 and 38 degrees.

6. Tyre (1, 40, 50) according to one of Claims 1 to 5, in which the tension applied to the said reinforcing threads during their adhesive coating treatment is less than 3 cN/tex.

7. Tyre (1, 40, 50) according to Claim 6, in which the tension applied to the said reinforcing threads during their adhesive coating treatment is less than 1.5 cN/tex.

8. Tyre (1, 40, 50) according to one of Claims 1 to 7, in which the yarn count of the reinforcing threads of the said ply of the said protective block has a value of greater than 600 tex.

9. Tyre (1, 40, 50) according to one of Claims 1 to 8, in which the said protective block ply (17, 44) extends axially beyond the said working block on either side of the midplane (P) of the tyre.

10. Tyre (1, 40, 50) according to one of Claims 1 to 9, in which the said protective block ply (17, 44) is radially externally adjacent to a ply (16) of substantially circumferentially oriented parallel reinforcing threads of the said working block.

11. Tyre (1, 40, 50) according to Claim 10, in which the reinforcing threads of the said working block ply (16) have an initial modulus of elasticity of greater than 1800 cN/tex.

12. Tyre (1, 40, 50) according to Claim 11, in which the reinforcing threads of the said working block ply (16) are aromatic polyamide reinforcing threads with helix angles of less than 26 degrees.

13. Tyre (1, 40, 50) according to one of Claims 10 to 12, in which, the crown comprising a central zone and two lateral zones, the working block also comprises two layers (42, 43) of reinforcing elements with an initial modulus of elasticity of greater than 1800 cN/tex, circumferentially oriented and arranged axially on either side of the midplane (P) of the tyre in the lateral zones of the said crown.

14. Tyre (1, 40, 50) according to one of Claims 10 to 13, in which the said working block also comprises two reinforcing plies (52, 53), parallel to each other in each ply and crossed from one ply to the next, forming, with the circumferential direction, an angle $\alpha$ of between 5 and 35 degrees, the said reinforcing threads having an initial modulus of greater than 1800 cN/tex.

## Patentansprüche

1. Reifen (1), umfassend eine Krone (2), zwei Seitenwände (3) und zwei Wülste (4), eine Karkassenarmierung (5), die in jeder der Wülste verankert ist, und eine Kronenarmierung (14, 41, 51), wobei die Kronenarmierung radial von innen nach außen einen Arbeitsblock und einen Schutzblock mit mindestens einer Faserschicht (17, 44) mit parallelen Verstärkungen, die im Wesentlichen im Umfang ausgerichtet sind, umfasst, wobei die Faserschicht (17, 44) des Schutzblocks aus aromatischen Polyamidverstärkungen besteht, **dadurch gekennzeichnet, dass** das anfängliche Modul der Verstärkungen kleiner als 1000 cN/Tex ist und die Festigkeit größer als 65 cN/Tex ist.

2. Reifen (1) nach Anspruch 1, wobei das anfängliche Modul aus aromatischen Polyamidverstärkungen kleiner oder gleich 500 cN/Tex ist.

**3.** Reifen (1, 40, 50), umfassend eine Krone (2), zwei Seitenwände (3) und zwei Wülste (4), eine Karkassenarmierung (5), die in jeder der Wülste verankert ist, und eine Kronenarmierung (14, 41, 51), wobei die Kronenarmierung radial von innen nach außen einen Arbeitsblock und einen Schutzblock mit mindestens einer Faserschicht (17, 44) mit parallelen Verstärkungen, die im Wesentlichen im Umfang ausgerichtet sind, umfasst, **dadurch gekennzeichnet, dass** die Faserschicht (17, 44) des Schutzblocks aus aromatischen Polyamidverstärkungen besteht, wobei der Steigungswinkel der Verstärkungen größer als 28 Grad ist.

**4.** Reifen (1, 40, 50) nach Anspruch 3, wobei der Steigungswinkel der Verstärkungen kleiner oder gleich 38 Grad ist.

**5.** Reifen (1, 40, 50) nach einem der Ansprüche 3 und 4, wobei der Steigungswinkel der Verstärkungen zwischen 31 und 38 Grad liegt.

**6.** Reifen (1, 40, 50) nach einem der Ansprüche 1 bis 5, wobei die auf die Verstärkungen aufgebrachte Spannung während ihrer Griffigmachungsbehandlung kleiner als 3 cN/Tex ist.

**7.** Reifen (1, 40, 50) nach Anspruch 6, wobei die auf die Verstärkungen aufgebrachte Spannung während ihrer Griffigmachungsbehandlung kleiner als 1,5 cN/Tex ist.

**8.** Reifen (1, 40, 50) nach einem der Ansprüche 1 bis 7, wobei die Feinheit der Verstärkungen der Faserschicht des Schutzblocks eine Feinheit, die größer als 600 Tex ist, aufweist.

**9.** Reifen (1, 40, 50) nach einem der Ansprüche 1 bis 8, wobei sich die Faserschicht (17, 44) des Schutzblocks axial über den Arbeitsblock auf beiden Seiten der Medianebene (P) des Reifens erstreckt.

**10.** Reifen (1, 40, 50) nach einem der Ansprüche 1 bis 9, wobei die Faserschicht (17, 44) des Schutzblocks radial nach außen an eine Faserschicht (16) mit parallelen Verstärkungen, die im Wesentlichen im Umfang des Arbeitsblocks ausgerichtet sind, angrenzt.

**11.** Reifen (1, 40, 50) nach Anspruch 10, wobei die Verstärkungen der Faserschicht (16) des Arbeitsblocks ein anfängliches Elastizitätsmodul, das größer als 1800 cN/Tex ist, aufweisen.

**12.** Reifen (1, 40, 50) nach Anspruch 11, wobei die Verstärkungen der Faserschicht (16) des Arbeitsblocks Verstärkungen aus aromatischem Polyamid mit Steigungswinkeln sind, die kleiner als 26 Grad sind.

**13.** Reifen (1, 40, 50) nach einem der Ansprüche 10 bis 12, wobei die Krone eine zentrale Zone und zwei seitliche Zonen umfasst, der Arbeitsblock ferner zwei Schichten (42, 43) von Elementen zur Verstärkung des anfänglichen Elastizitätsmoduls, das größer als 1800 cN/Tex ist, umfasst, welche im Umfang ausgerichtet und axial auf beiden Seiten der Medianebene (P) des Reifens in den seitlichen Zonen der Krone angeordnet sind.

**14.** Reifen (1, 40, 50) nach einem der Ansprüche 10 bis 13, wobei der Arbeitsblock ferner zwei Verstärkungsfaserschichten (52, 53) umfasst, die in jeder Faserschicht zueinander parallel sind und von einer Faserschicht zur nächsten überkreuzt sind, wobei sie mit der Umfangsrichtung einen Winkel $\alpha$ bilden, der zwischen 5 und 35 Grad liegt, wobei die Verstärkungen ein anfängliches Modul, das größer als 1800 cN/Tex ist, aufweisen.

**Fig. 1**

**Fig. 2**

**Fig. 3**

**Fig. 4**

**Fig. 5**

**EP 1 305 171 B1**

**Documents brevets cités dans la description**

- WO 9900260 A
- EP 0698510 A
- EP 242840 A
- EP 822047 A
- WO 9747463 A
- EP 0718090 A